# EUROPÄISCHE PATENTSCHRIFT

(11) **EP 0 421 019 B1**
(45) Veröffentlichungstag und Bekanntmachung des Hinweises auf die Patenterteilung: **19.01.1994**
(21) Anmeldenummer: 89118619.9
(22) Anmeldetag: 06.10.1989
(51) Int. Cl.: B29C 65/08

(54) **Verfahren und Vorrichtung zum Fügen von Kunststoffteilen durch Ultraschall**
Method and device for joining plastic parts with ultrasonic waves
Méthode et dispositif de jointure d'éléments en matière plastique par ultrasons

(43) Veröffentlichungstag der Anmeldung: 10.04.1991
(73) Patentinhaber: SIEMENS AKTIENGESELLSCHAFT, 80333 München (DE)
(72) Erfinder: Krause, Ralf-Dieter, Dipl.-Ing., D-8500 Nürnberg 30 (DE); Moll, Helmut, Dipl.-Ing.(FH), D-8520 Erlangen (DE)

(56) Entgegenhaltungen:
- FR-A- 2 302 172
- US-A- 4 631 685

## Beschreibung

Die Erfindung bezieht sich auf ein Verfahren zum Fügen von Kunststoffteilen durch Ultraschall, insbesondere zum Schweißen, Nieten, Bördeln oder Verformen, bei dem über eine Sonotrode bei Aufliegen auf den Fügeteilen durch Kraftbeaufschlagung einerseits und durch Ultraschalleinwirkung andererseits eine über die Fügezeit vorgegebene Materialverformung entsprechend einer vorgegebenen Absenkgeschwindigkeit der Sonotrode erreicht wird, wobei die Absenkgeschwindigkeit regel- oder programmierbar ist. Im Rahmen der Erfindung kann auch ein Kunststoffteil mit einem metallischen Werkstück verbunden werden, wobei die Materialverformung ausschließlich im Kunststoff erfolgt. Daneben bezieht sich die Erfindung auf eine zugehörige Vorrichtung zur Durchführung des Verfahrens mit einem Antriebssystem einer Ultraschall-Schweißpresse, wobei die Schweißpresse aus einer von einem Generator aktivierbaren absenkbaren Sonotrode und einem feststehenden Amboß zur Aufnahme der Kunststoffteile besteht, wobei ein Motor vorhanden ist, dem Mittel zur Steuerung bzw. Programmierung zugeordnet sind.

Speziell bei der Ultraschall-Kunststoffügetechnik, die im Fertigungsbetrieb eine immer größere Rolle einnimmt, ist die Qualität zu optimieren und sind insbesondere die Prozeßzeiten für den einzelnen Fertigungsschritt zu minimieren. Die Konstanz und die schnelle Einstellbarkeit bzw. Veränderbarkeit der Prozeßgrößen sind insbesondere beim Schweißen, Nieten, Bördeln und Verformen von Thermoplasten eine wichtige Voraussetzung für einen sicheren Prozeßablauf. Während die Konstanz der Größen Amplitude, Verformungsweg und Zeit im allgemeinen sichergestellt wird, unterliegen die Parameter Schweißkraft und Arbeitsgeschwindigkeit in der Praxis durchweg starken Schwankungen.

Bei den Ultraschall-Schweißanlagen des Standes der Technik wird im allgemeinen die Schweißkraft pneumatisch aufgebracht und die Absenkgeschwindigkeit der Sonotrode durch pneumatische Drosseln bzw. durch Auffahren auf einen hydraulischen Dämpfungszylinder vorgewählt. Die Arbeitsgeschwindigkeit der Sonotrode kann nur indirekt durch die Größen Schweißkraft, Drossel- bzw. Dämpferstellung, Amplitude und dem Plastifizierungsverhalten der Kunststoffteile beeinflußt werden. Schwankungen der Arbeitsgeschwindigkeit und der Schweißkraft bewirken aber Qualitätsschwankungen der Fügeteile.

Aus der FR-A-23 02 172 ist eine Vorrichtung zum Ultraschallschweißen mit einer absenkbaren Sonotrode bekannt, bei der die Sonotrode mit einem Motor über eine Untersetzung und zugehörigem Antriebsrad mit daran eingreifender Zahnstange verbunden ist, und bei der Mittel zur Erfassung der Absenkgeschwindigkeit der Sonotrode vorhanden sind. Damit soll insbesondere die Dauer der Ultraschalleinwirkung regeltechnisch mit der Bewegung des Schweißkopfes verknüpft werden, wozu eine elektrische Spannung in Abhängigkeit von der Verschiebegeschwindigkeit der Sonotrode erzeugt wird. Davon abgesehen, wird auf Seite 5, Zeilen 1 bis 15 der FR-A-23 02 172 erwähnt, daß eventuell vorgesehen werden kann, die Absenkgeschwindigkeit der Sonotrode in Abhängigkeit von erzielten Ergebnissen zu programmieren. Konkrete technische Angaben sind allerdings nicht vorhanden.

Weiterhin ist aus der SU-A-721 286 eine Einrichtung zur Steuerung eines Mikroschweißvorganges mittels Ultraschall bekannt, bei dem das Schließen eines Auslösekontaktes über eine vorbestimmte Anzahl von Schritten eines Schrittmotors es ermöglicht, die für das Verschweißen notwendige Verformung zu erreichen. Damit soll insbesondere die Qualität von metallischen Schweißverbindungen in der Massenfertigung in Abhängigkeit von der Werkstückform, Größe und Oberflächenbeschaffenheit gewährleistet werden.

Schließlich ist aus der DE-A-37 23 333 ein Verfahren zur Steuerung von Ultraschall-Schweißmaschinen bei der Verschweißung von Werkstücken über eine druckmittelbeaufschlagbare Vorschubeinheit mit Sonotrode bekannt, bei dem der Andruck der Sonotrode durch zeit-und/oder vorschubwegabhängige Veränderungen des Druckes in dem die Vorschubeinheit beaufschlagendem Druckmittel entsprechend dem materialbedingten Schweißverhalten der zu verschweißenden Werkstücke gesteuert wird. Speziell zur Verschweißung von thermoplastischen Kunststoffen soll dabei der Andruck der Sonotrode entsprechend dem Erweichungsverhalten des Kunststoffmaterials gesteuert werden.

Aufgabe der Erfindung ist es demgegenüber, gleichermaßen die Größen Kraft und Arbeitsgeschwindigkeit bei der Ultraschallfügetechnik gezielt zu beeinflussen und ungewollte Abweichungen dieser Größen mit damit verbundenen Qualitätsschwankungen der Fügeteile auszuschließen. Dazu soll eine geeignete Vorrichtung bereitgestellt werden.

Die Aufgabe ist erfindungsgemäß dadurch gelöst, daß Parameter für die Einstellung bzw. Regelung der Absenkgeschwindigkeit der Sonotrode während der Fügezeit die sich im Kunststoffteil aufbauende Kraft ist, wobei entweder zur Realisierung eines gewünschten Kraftverlaufes die Absenkgeschwindigkeit als Zeitprofil vorgegeben wird oder aber die Kraft als Zeitprofil vorgegeben ist und als Führungsgröße für die Regelung der Absenkgeschwindigkeit dient. Dabei kann vorteilhafterweise auch zusätzlich die Verformung der Fügeteile berücksichtigt werden.

Bei der zugehörigen Vorrichtung mit einem Antriebssystem einer Ultraschall-Schweißpresse der eingangs genannten Art sind dem Generator für die Sonotrode ein Steuergerät nachgeschaltet, mit dem gleichermaßen die zeitliche Ultraschallaktivierung der Sonotrode und die Regelung bzw. Programmierung des Motorantriebes erfolgt. Dabei besteht der programmierbare Motorantrieb der Vorrichtung vorzugsweise aus einem Drehstrommotor mit Getriebe und Tachogenerator. Insbesondere enthält die Schweißpresse und/ oder der Motorantrieb wenigstens einen Kraftsensor, der entweder zwischen Antrieb und Sonotrode oder aber im Amboß eingebaut ist. Zusätzlich kann die Schweißpresse auch einen Wegaufnehmer enthalten. Kraftsensor und/oder Wegaufnehmer können insbesondere als Signalgeber für die Regelung dienen. In jedem Fall sind die Mittel zur Steuerung bzw. Programmierung der Absenkgeschwindigkeit der Sonotrode derart ausgebildet, daß die Geschwindigkeit der Zustellbewegung der Sonotrode und deren Arbeitsgeschwindigkeit beim Fügen separat vorgebbar sind.

Weitere Einzelheiten und Vorteile der Erfindung ergeben sich aus der nachfolgenden Figurenbeschreibung von Ausführungsbeispielen anhand der Zeichnung. Es zeigen in schematischer Darstellung
- FIG 1: Ultraschallwerkzeuge zum Nieten von Kunststoffteilen,
- FIG 2: ein damit gefertigter Kunststoffniet,
- FIG 3: eine dabei verwendete Schweißpresse mit programmierbarem Motorantrieb,
- FIG 4: Schweißgrößen-Zeit-Diagramme beim herkömmlichen Prozeßablauf sowie die
- FIG 5: entsprechende Diagramme beim vorgeschlagenen Prozeßablauf.

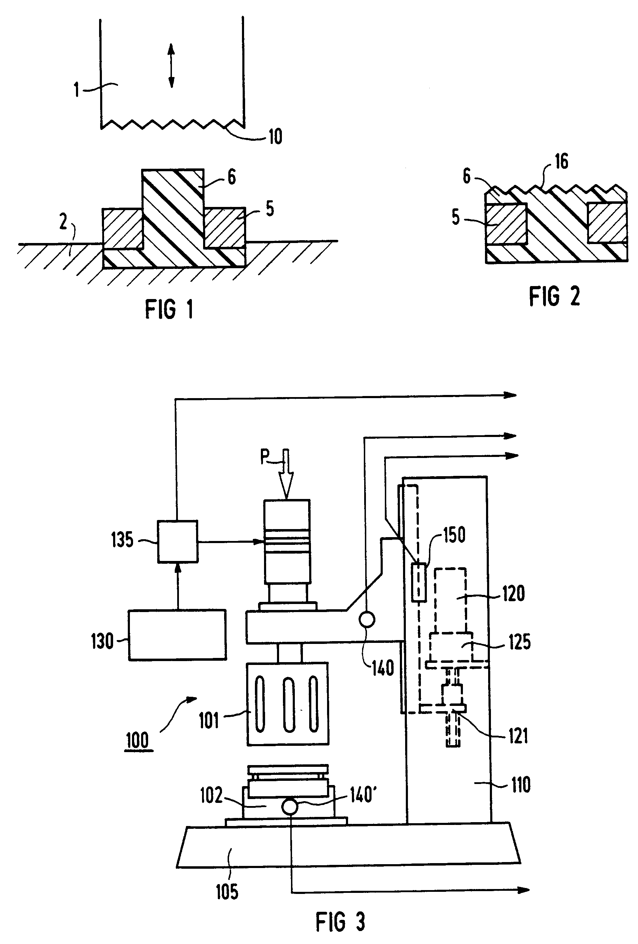

Beim Ultraschall-Kunststoffnieten wird zumindest ein Teil gleichermaßen durch Kraftbeaufschlagung und durch Ultraschalleinwirkung plastifiziert, so daß ein einheitliches Fügeteil entsteht. In FIG 1 ist dafür eine UltraschallSonotrode 1 vorhanden, die in senkrechter Richtung mit einer Frequenz von beispielsweise 20 KHz schwingt und nach einer Absenkbewegung bis auf die Werkstücke mit einer Kraft von beispielsweise 50 N auf die im Amboß 2 fixierten Werkstücke drückt.

Dabei stellt 5 ein Basisteil und 6 den eigentlichen Kunststoffniet dar, der vor der Fügeverbindung aus dem Basisteil 5 heraussteht. Das Basisteil 5 kann aus metallischem oder duroplastischem Material bestehen. Die Sonotrode 1 kann an ihrer Arbeitsfläche 10 eine Struktur, insbesondere nach Art eines sogenannten Waffelsmusters, haben.

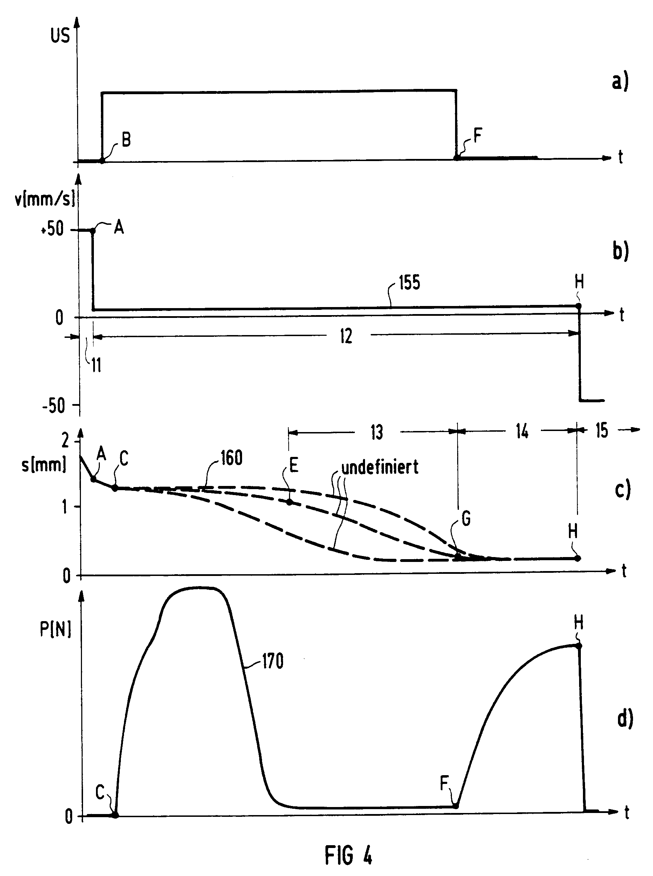

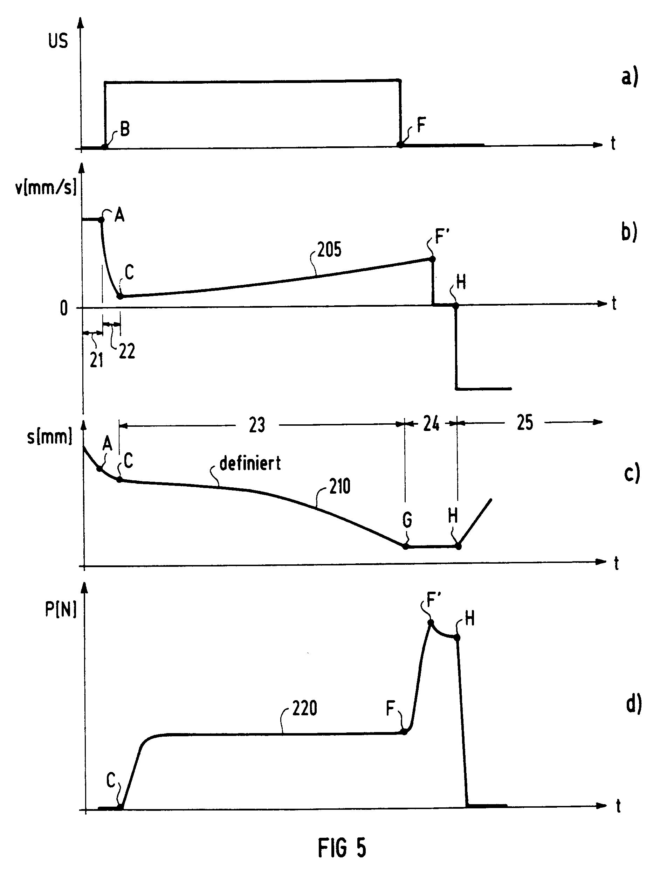

Nach dem Aufsetzen der Sonotrode 1 mit Arbeitsfläche 10 auf dem Niet 6 beginnt der eigentliche Prozeßablauf, der anhand der Figuren 4 und 5 weiter unten im einzelnen erläutert wird. Ergebnis der Nietung ist ein einheitliches Fügeteil gemäß FIG 2, bei dem der freistehende Kopf des Nietes 6 verformt ist und mit dem Grundteil 5 eine stoffschlüssige Verbindung bildet. Die Oberfläche des Nietes 6 hat nach Fertigstellung eine Struktur 16 entsprechend der Struktur 10 der Sonotrode.

Beim Ultraschall-Nieten entsprechend FIG 1 und FIG 2 tritt bei zu hohen Arbeitsgeschwindigkeiten eine hohe Stauchkraft auf. Dadurch werden unter Umständen die Nietschäfte 5 mechanisch gestaucht, so daß mechanische Spannungen eingefroren werden. Insbesondere bei harten thermoplastischen Materialien als Nietschaft 5 besteht die Gefahr der Rißbildung.

Bei kleinen Arbeitsgeschwindigkeiten und dementsprechend langsamerer Krafteinleitung können die Fügeteile 5 und 6 durch den Ultraschall gleichmäßig erwärmt und der Kunststoff schonend plastifiziert werden. Beim Stand der Technik wird nach Beginn dieses Plastifizierungsvorganges mit konstanter Geschwindigkeit weiter verformt, obwohl die Plastifizierungsgeschwindigkeit des bereits erwärmten Nietschaftes eine höhere Absenkgeschwindigkeit der Sonotrode zulassen würde. Dadurch dauert ein einzelner Nietvorgang insgesamt vergleichsweise lange.

Durch ein geeignetes Antriebssystem der Schweißpresse mit Sonotrode 1 und Amboß 2 ist über einen elektrisch programmierbaren Motorantrieb die Absenkgeschwindigkeit der Sonotrode 1 mit ihren separaten Teilgrößen "Zustellbewegung" und "Arbeitsgeschwindigkeit" steuer- bzw. regelbar. Dafür sind in die Schweißpresse oder im Amboß Kraft- und/oder Wegsensoren eingebaut, so daß der Zusammenhang zwischen Geschwindigkeit und Kraft festgestellt werden kann und durch geeignete Geschwindigkeitsprofile die Prozeßzeit und die Qualität der Fügeteile optimiert werden können.

Bei einer Schweißpresse 10 gemäß Figur 3 ist eine Ultraschall-Sonotrode 101 als aktives Schweißwerkzeug am verschiebbaren Schlitten 115 eines Ständers 110 angebracht. Der Ständer 110 steht auf einer Grundplatte 105 mit einem Amboß 102 als Aufnahmewerkzeug für die Fügeteile. Im Ständer 110 ist ein Drehstrommotor 120 mit Getriebe 121 angeordnet, mit dem die Motorbewegung auf den Schlitten 115 übertragen wird. Die Drehbewegung des Motors 120 bzw. die dadurch erzielte Absenkbewegung der Sonotrode 101 kann mit einem Tachogenerator 125 vorgegeben werden.

Der Sonotrode 101 mit Ultraschall-Wandler ist ein Generator 130 mit nachgeschaltetem Steuergerät 135 zugeordnet, mit dem gleichermaßen die zeitliche Ultraschallaktivierung der Sonotrode und der Motorantrieb gesteuert wird.

Die Schweißpresse 100 weist weiterhin einen Kraftaufnehmer 140 bzw. 140′ auf, der entweder im Ausleger 115 oder aber vorteilhafterweise im Amboß 102 angeordnet ist. Dadurch kann die sich in den Fügeteilen aufbauende Kraft unmittelbar erfaßt werden. Zusätzlich kann auch ein Wegmeßsystem 150 vorhanden sein, mit dem der tatsächliche Verformungsweg der Fügeteile kontrollierbar ist.

Über eine Programmierung des Steuergerätes 135 wird die Ultraschallaktivierung und die Absenkgeschwindigkeit der Sonotrode 101 hinsichtlich Beginn und Ende eingestellt. Insbesondere die Absenkgeschwindigkeit der Sonotrode kann dabei auch als veränderliches Zeitprofil vorgegeben werden. Dieses Zeitprofil wird so eingestellt, daß ein gewünschter Kraftverlauf realisiert wird. Alternativ kann auch die Kraft als Zeitprofil vorgegeben werden, wobei ein solches Zeitprofil als Führungsgröße für die Regelung der Absenkgeschwindigkeit verwendet wird. Dabei kann auch der aktuelle Verformungsweg in den Regelkreis eingebunden sein.

In den Figuren 4a bis 4d und den Figuren 5a bis 5d sind die Prozeßparameter Ultraschall, vorgegebene Geschwindigkeit der Sonotrode, tatsächliche Absenkgewegung der Sonotrode sowie ermittelte Kraft in den Werkstücken für den pneumatischen Antrieb einerseits und den elektrischen Antrieb andererseits gegenübergestellt. Dabei haben die Graphen für den pneumatischen Antrieb 100er Bezugszeichen und die Graphen für den elektrischen Antrieb 200er Bezugszeichen. Die Kennlinien lassen sich in einzelne, phänomenologisch signifikante Bereiche einteilen.

In beiden Fällen verläuft die Bewegung der Sonotrode 1 zunächst im Bereich 11 mit einer freien Absenkgeschwindigkeit, beispielsweise 50 mm/s. Vom Punkt A wird im allgemeinen die Absenkgeschwindigkeit der Sonotrode gedämpft und verläuft somit im Bereich 12 mit verringerten Werten, beispielsweise 1 mm/s. Am Punkt B wird der Ultraschall aktiviert, so daß mit dem Auftreffen der Sonotrode 1 auf dem kalten Werkstück am Punkt C ein starker Kraftanstieg gemäß Figur 4d erfolgt. Die Punkte B und C können zeitlich zusammenliegen, d.h. der Ultraschall wird unmittelbar mit dem Berühren des Werkstückes durch die Sonotrode aktiviert.

Beim pneumatisch gesteuerten Pressenantrieb erfolgt vom Punkt A die weitere Absenkgeschwindigkeit der Sonotrode 1 mit konstanten Werten, beispielsweise 1 mm/s, gemäß Graph 155. Die sich daraus ergebende tatsächliche Absenkgeschwindigkeit der Sonotrode 1 kann jedoch von dem eingestellten Wert abweichen, wie dies anhand des Graphen 160 der FIG 4c ersichtlich ist. Sie verbleibt im wesentlichen gleich, sofern im Werkstück noch ein Druckanstieg bzw. ein konstanter Gegendruck vorliegt. Wird jedoch durch die Plastifizierung des Kunststoffes dieser Druck entsprechend dem Graphen 170 der FIG 4d abgebaut und sinkt dieser Wert gegen Null, so wird auch die Geschwindigkeit der Absenkbewegung geringer. Dies ist im Bereich 13 angedeutet, wobei die Plastifizierung und damit die daraus entstehende Arbeitsgeschwindigkeit undefiniert vor sich geht. Im Punkt F wird die Ultraschallaktivierung beendet, womit durch die Abkühlung und damit verbundene Verfestigung des Kunststoffes wieder ein Kraftanstieg entsteht. Bei G ist die Verformung mittels Ultraschall beendet. Durch die konstante Geschwindigkeit liegt aber im Bereich 14 noch eine Haltezeit mit undefinierter Verformung durch den Nachdruck vor. Beim Punkt H wird die Haltezeit beendet, so daß die Rückfahrbewegung der Sonotrode 1 über den Bereich 15 mit freier Geschwindigkeit, beispielsweise wieder mit 50 mm/s, erfolgt.

Durch eine Geschwindigkeitsvorgabe in Abhängigkeit von der Kraft kann beim elektrischen Pressenantrieb mit Programmsteuerung die Prozeßzeit zum Erreichen gleich guter Qualitäten der Nietung wesentlich vermindert werden: Dabei wird der Bereich 13 zwischen den Punkten E und G, in dem beim pneumatischen Sonotrodenvorschub völlig undefinierte Vorgänge erfolgen, gezielt ausgenutzt. Bei FIG 5 stellen die Buchstaben A bis H die gleichen Zeitpunkte wie in FIG 4 dar. Die Zeitbereiche 21 und 22 entsprechen den Zeitbereichen 11 und 12. Statt des Plastifizierungsbereiches 13 mit undefinierter Arbeitsgeschwindigkeit erfolgt aber nunmehr vom Punkt C ab im Gesamtbereich ein Geschwindigkeitsanstieg mit einem vorgegebenen Geschwindigkeitsprofil, wie es dem Graphen 205 der FIG 5a entnehmbar ist. Damit wird insbesondere der Bereich der Plastifizierung entsprechend dem Graphen 220 der FIG 5d derart ausgenutzt, daß der Druckverlauf weitgehend konstant ist. Dies macht sich in einem definierten Verlauf der tatsächlichen Absenkbewegung der Sonotrode 1 gemäß dem Graphen 210 der FIG 5c bemerkbar.

Dadurch daß über den gesamten Bereich 23 weitgehend gleichmäßige Kraftverhältnisse in den Fügeteilen aufbauen, kann der Zeitraum der Ultraschalleinwirkung zum Erreichen der gewünschten Stoffschlußverbindung der beiden Fügeteile kürzer als bisher gehalten werden. Nach dem Ende der Ultraschalleinwirkung liegt nunmehr nur noch eine kurze Haltezeit 24 vor, bei dem ein definierter Überhub gegeben ist, der durch den Weg bzw. das Kraftmaximum in FIG 5d begrenzt wird. Vom Punkt H erfolgt im Bereich 25 eine Rückfahrbewegung der Sonotrode 1 entsprechend dem Bereich 15 in FIG 4.

In der FIG 5b wurde die Absenkgeschwindigkeit zwischen den Punkten C und F′ weitgehend linear ansteigend vorgegeben. Sie kann auch leicht exponentiell und insbesondere als Funktion der Kraft variiert werden. Damit ist die Möglichkeit eines geschlossenen Regelkreislaufes gegeben.

Der Vergleich der einzelnen Diagramme zeigt deutlich die Vorzüge des elektrischen Motorantriebes gegenüber einem pneumatisch bewirkten Antrieb, sofern nach dem erfindungsgemäß angegebenen Verfahren gearbeitet wird: Bei der Absenk-bzw. bei der Arbeitsgeschwindigkeit der Sonotrode liegen nunmehr definierte Randbedingungen vor. Es ergeben sich niedrigere Kraftspitzen während der Erwärmungs- und Nachkühlzeit und insgesamt in erwünschter Weise ein gleichmäßigerer Kraftverlauf.

Vorteilhaftermaßen wird mit dem erfindungsgemäßen Verfahren eine kürzere Prozeßzeit erreicht, da nach der Erwärmung des Teiles die Absenkgeschwindigkeit der Sonotrode erhöht werden kann. Die Prozeßzeit kann bis zu 50 % unter der bisher als notwendig erachteten Zeit liegen.

Insgesamt läßt sich bei Einhaltung der vorgegebenen Randbedingungen eine gleichbleibende Qualität in der Kunststoff-Fügetechnik erreichen.

## Patentansprüche

1. Verfahren zum Fügen von Kunststoffteilen durch Ultraschall, insbesondere Schweißen, Nieten, Bördeln oder Verformen, bei dem über eine Sonotrode (1/101) bei Aufliegen auf den Fügeteilen (5, 6) durch Kraftbeaufschlagung einerseits und durch Ultraschalleinwirkung andererseits eine über die Fügezeit vorgegebene Materialverformung entsprechend einer vorgegebenen Absenkgeschwindigkeit (V) der Sonotrode (1) erreicht wird, wobei die Absenkgeschwindigkeit (V) regel- oder programmierbar ist, **dadurch gekennzeichnet**, daß die Parameter für die Absenkgeschwindigkeit (V) der Sonotrode (1/101) während der Fügezeit (12) die sich im Kunststoffteil (5, 6) aufbauende Kraft ist, wobei entweder zur Realisierung eines gewünschten Kraftverlaufes die Absenkgeschwindigkeit (V) als Zeitprofil (205) vorgegeben wird oder aber die Kraft als Zeitprofil (220) vorgegeben ist und als Führungsgröße für die Regelung der Absenkgeschwindigkeit (V) der Sonotrode (1, 101) dient.

2. Verfahren nach Anspruch 1, **dadurch gedurch gekennzeichnet,** daß zusätzlich die Verformung der Fügeteile (5, 6) berücksichtigt wird.

3. Vorrichtung zur Durchführung eines Verfahrens gemäß Anspruch 1 oder Anspruch 2, mit einem Antriebssystem einer Ultraschall-Schweißpresse (100), wobei die Schweißpresse (100) aus einer von einem Generator (130) aktivierbaren, absenkbaren Sonotrode (101) und einem feststehenden Amboß (102) zur Aufnahme der Kunststoffteile besteht, wobei ein Motor (120) vorhanden ist, dem Mittel (12, 125, 150) zur Steuerung bzw. Programmierung zugeordnet sind, **dadurch gekennzeichnet**, daß dem Generator (130) für die Sonotrode (101) ein Steuergerät (135) nachgeschaltet ist, mit dem gleichermaßen die zeitliche Ultraschallaktivierung der Sonotrode (101) und die Regelung bzw. Programmierung des Motorantriebes (120) erfolgt.

4. Vorrichtung nach Anspruch 3, **dadurch gekennzeichnet**, daß der programmierbare Motorantrieb aus einem Drehstrommotor (120) mit Getriebe (121) und Tachogenerator (125) besteht.

5. Vorrichtung nach Anspruch 3, **dadurch gekennzeichnet**, daß die Schweißpresse (100) und/oder der Motorantrieb (120) wenigstens einen Kraftsensor (140, 140') enthält.

6. Vorrichtung nach Anspruch 5, **dadurch gekennzeichnet**, daß der Kraftsensor (140) zwischen Antrieb (120) und Sonotrode (101) eingebaut ist.

7. Vorrichtung nach Anspruch 5, **dadurch gekennzeichnet**, daß der Kraftsensor (140) im Amboß (102) eingebaut ist.

8. Vorrichtung nach Anspruch 3, **dadurch gekennzeichnet**, daß die Schweißpresse (100) einen Wegaufnehmer (150) enthält.

## Claims

1. A method for joining plastics parts by ultrasonics, in particular by welding, riveting, flanging or deforming in which, by way of a sonotrode (1/101), when resting on the jointed parts (5,6), by force loading, on the one hand, and by ultrasonic action, on the other hand, a material deformation specified over the joining time is achieved corresponding to a specified lowering speed (V) of the sonotrode (1), wherein the lowering speed (V) is able to be regulated or programmed,
characterised in that the parameter for the lowering speed (V) of the sonotrode (1/101) during the joining time (12) is the force building-up in the plastics part (5,6), wherein either the lowering speed (V) is specified as time profile (205) for realising a desired force progression or, on the other hand, the force is specified as a time profile (220) and serves as reference variable for controlling the lowering speed (V) of the sonotrode (1, 101).

2. A method according to claim 1,
characterised in that in addition the deformation of the jointed parts (5,6) is considered.

3. A device for carrying out a method according to claim 1 or 2, with a drive system of an ultrasonic welding press (100), wherein the welding press (100) consists of a lowerable sonotrode (101), able to be activated by a generator (130), and a stationary anvil (102) for receiving the plastics parts, wherein a motor (120) is present, to which are allocated means (12,125, 150) for controlling or programming, characterised in that a control device (135) is downstream of the generator (130) for the sonotrode (101), with which device likewise the temporal ultrasonic activation of the sonotrode (101) and the control or programming of the motor drive (120) occurs.

4. A device according to claim 3,
characterised in that the programmable motor drive consists of a three-phase a.c. motor (120) with a gearing (121) and tachometer generator (125).

5. A device according to claim 3,
characterised in that the welding press (100) and/or the motor drive (12) contains at least one force sensor (140, 140').

6. A device according to claim 5,
characterised in that the force sensor (140) is fitted between the drive (120) and the sonotrode (101).

7. A device according to claim 5,
characterised in that the force sensor (140) is fitted in the anvil (102).

8. A device according to claim 3,
characterised in that the welding press (100) contains a position pickup (150).

## Revendications

1. Procédé pour réunir des pièces en matière plastique au moyen des ultrasons, notamment par soudage, rivetage, sertissage ou déformation, selon lequel on obtient une déformation de matière, prédéterminée en fonction de la durée de l'opération de liaison, par l'intermédiaire d'une sonotrode (1/101) lors de son application sur les pièces à réunir (5,6) d'une part par application d'une force et d'autre part par action des ultrasons, conformément à une vitesse prédéterminée d'abaissement (V) de la sonotrode (1), la vitesse d'abaissement (V) étant réglable ou programmable, caractérisé par le fait que le paramètre pour la vitesse d'abaissement (V) de la sonotrode (1/101) pendant la durée (12) de l'opération de liaison est la force qui s'établit dans la pièce en matière plastique (5,6), la vitesse d'abaissement (V) étant, pour l'obtention d'une allure désirée de la force, prédéterminée sous la forme d'un profil dans le temps (205) ou bien la force étant prédéterminée sous la forme d'un profil dans le temps (220) et étant utilisée comme grandeur pilote pour la régulation de la vitesse d'abaissement (V) de la sonotrode (1,101).

2. Procédé suivant la revendication 1, caractérisé par le fait qu'en outre on tient compte de la déformation des pièces à réunir (5,6).

3. Dispositif pour la mise en oeuvre d'un procédé suivant la revendication 1 ou 2, comportant un système d'entraînement d'une presse de soudage à ultrasons (100), qui est constituée par une sonotrode (101) qui peut être abaissée et peut être activée par un générateur (130), et une enclume fixe (102) servant à recevoir les pièces en matière plastique, et dans lequel il est prévu un moteur (120) auquel sont associés des moyens (12,125,150) de commande et de programmation, caractérisé par le fait qu'en aval du générateur (130) pour la sonotrode (101) est monté un appareil de commande (135), au moyen duquel s'effectuent de la même manière l'activation dans le temps des ultrasons de la sonotrode (101) et la régulation ou la programmation du dispositif d'entraînement à moteur (120).

4. Dispositif suivant la revendication 3, caractérisé par le fait que le dispositif d'entraînement programmable à moteur est constitué d'un moteur triphasé (120) muni d'une transmission (121) et d'un génératrice tachymétrique (125).

5. Dispositif suivant la revendication 3, caractérisé par le fait que la presse de soudage (100) et/ou le dispositif d'entraînement à moteur (120) contient au moins un capteur de force (140,140').

6. Dispositif suivant la revendication 5, caractérisé par le fait que le capteur de force (140) est monté entre le dispositif d'entraînement (120) et la sonotrode (101).

7. Dispositif suivant la revendication 5, caractérisé par le fait que le capteur de force (140) est monté dans l'enclume (102).

8. Dispositif suivant la revendication 3, caractérisé par le fait que la presse de soudage (100) contient un capteur de déplacement (150).
